## Europäisches Patentamt
## European Patent Office
## Office européen des brevets

(11) Publication number: **0 093 156**
**B1**

(12) **EUROPEAN PATENT SPECIFICATION**

(45) Date of publication of patent specification: **28.05.86**

(51) Int. Cl.⁴: **C 04 B 22/08**

(21) Application number: **82903625.0**

(22) Date of filing: **01.11.82**

(86) International application number:
**PCT/US82/01543**

(87) International publication number:
**WO 83/01615 11.05.83 Gazette 83/11**

(54) **RAPID SETTING ACCELERATORS FOR CEMENTITIOUS COMPOSITIONS.**

(30) Priority: **02.11.81 US 317008**

(43) Date of publication of application:
**09.11.83 Bulletin 83/45**

(45) Publication of the grant of the patent:
**28.05.86 Bulletin 86/22**

(84) Designated Contracting States:
**AT BE CH DE GB LI SE**

(56) References cited:
**DE-C- 353 617**
**US-A-4 209 335**

(73) Proprietor: **PROTEX INDUSTRIES, INC.**
**1331 West Evans Avenue**
**Denver, CO 80223 (US)**

(72) Inventor: **SCHUTZ, Raymond J.**
**R.R. 1**
**Sedalia, CO 80135 (US)**

(74) Representative: **Lambert, Hugh Richmond et al**
**D. YOUNG & CO. 10 Staple Inn**
**London, WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Technical field

This invention relates to setting accelerators for cementitious compositions, particularly shotcrete. The invention further relates to the cementitious compositions which incorporate these accelerators.

Background art

Prior art statement

Accelerators utilized in rapid setting cementitious compositions, such as shotcrete, are usually comprised of sodium aluminate, sodium carbonate, combinations of these two or sodium silicate. However, all of these accelerators are caustic, causing burns and dermatitis to those working with cement containing these accelerators. Moreover, accelerators based solely on sodium aluminate, although they impart a good initial set, impart a very slow final set to the cementitious composition. Sodium aluminate also lowers the resistance of mortars and concretes to sulfate and chemical attack. Sodium carbonate accelerators have poor initial set characteristics, and although they will reduce drying shrinkage, they also reduce the ultimate strength of the resulting concrete. Similarly, concretes containing sodium silicate accelerators exhibit low ultimate strengths.

Trivalent iron salts have been investigated as potential accelerators for cementitious compositions. Rosenburg, T. I., et al, "Investigation of trivalent Iron Salts as Admixtures Accelerating the Hardening of Concrete", *Intl. Symp. Admix. Mortar & Concr.* Belg 67; Report III—IV/10, pp. 169—180, report that ferric sulfate, ferric chloride and ferric nitrate accelerate the initial hardening of cement. Although an accelerated initial hardening of a cement may allow for a successful spray application of the cement, as they state, such cement would serve no useful purpose because of the long final set required for the cement and the slow strength development.

Several patents disclose rapid setting accelerators for cement. For example, U.S. 4,066,469 to Shiel, et al discloses an ultra-rapid hardening Portland cement which contains at least one acid salt, other than phosphorous, of an alkali metal, ammonium or an organic base, e.g., an amine, and cement which has been ground to 3,000—7,000 $cm^2/g$. U.S. 2,918,385 to Arpin, et al discloses a quick setting cement comprised of Portland cement, kaolin and anhydrous calcium sulfate. U.S. 3,782,991 to Burge, although directed toward an additive for improving the quality of a cement mixture, discloses as setting accelerators alkanolamines, alkali silicates and alkaline or alkali reacting compounds such as hydroxides, carbonates and sodium aluminate. U.S. 2,995,454 to Handl teaches a dry binder for cement which is comprised of anhydride, an alkali metal silicate and a non-alkali metal salt, e.g., aluminium, iron, copper, zinc, manganese, chromium or nickel. U.S. 3,864,141 to Uchikawa, et al discloses a process for regulating the setting time of hydraulic cement with anhydride with or without hemihydrate and organic compounds such as sugars, carboxylic acids, ligninsulfonates, etc. and inorganic compounds such as water-soluble phosphates, sodium hydrogen carbonate may be added.

In US—A—4,209,335 a hydraulic cement composition is disclosed for fixing waste matter and in particular waste matter and/or soil in muddy, powdery or particulate form containing toxic substances or substances otherwise affecting the ecological system and harmful to the environment. Such waste matter often includes material detrimental to the setting of the cement. To combat that US—A—4,209,335 proposes a setting agent for hydraulic cements comprising, as a first ingredient, a sulphate selected from aluminium sulphate, alum, ferrous sulphate and ferric sulphate, a second ingredient selected from alkaline metal carbonates, bicarbonates and silicates, and as an optional third ingredient an oxide or hydroxide of an alkaline earth metal. However that patent is not specifically concerned with rapid setting cementitious compositions and does not identify any particular benefit to be obtained by the specific combination of an alkaline metal carbonate and an inorganic ferric salt in accordance with the findings of the present invention.

The accelerators of the present invention are comprised of an alkali metral carbonate and an inorganic salt of ferric iron. This mixture of accelerators unexpectantly acts together to achieve initial and final setting times which are faster than what would be expected by averaging the setting times obtained by each of the two components. Moreover, the accelerators are noncaustic and the cementitious compositions incorporating these accelerators generally obtain an initial and final set in fewer than about ten minutes and the resulting rapid setting concrete has a greater strength than rapid setting concrete utilizing prior art accelerators.

Disclosure of the invention

The rapid set accelerators of cementitious compositions are comprised of an alkali metal carbonate and an inorganic salt of ferric iron. The accelerators are particularly useful when it is desirous to obtain both an initial and a final set of the cementitious composition within about 10 minutes after the hydration of the cementitious composition. Thus, the accelerators are particularly useful in the preparation of shotcrete or hand applied mortar. Additionally, hardened cementitious compositions containing these accelerators have improved strength characteristics compared to rapid setting cementitious compositions which utilize accelerators comprised of sodium carbonate and sodium aluminate. Moreover, because the accelerators are noncaustic, the hazards of burns and dermatitis to the people handling the cementitious composition are greaterly reduced compared to cementitious compositions containing conventional rapid set accelerators, e.g., sodium carbonate and sodium aluminate.

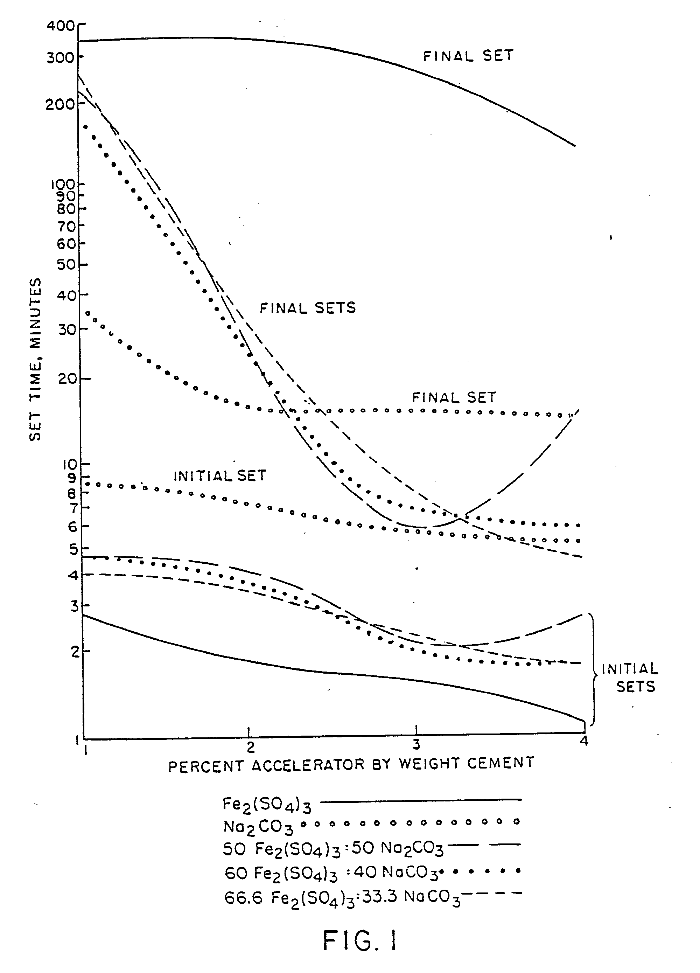

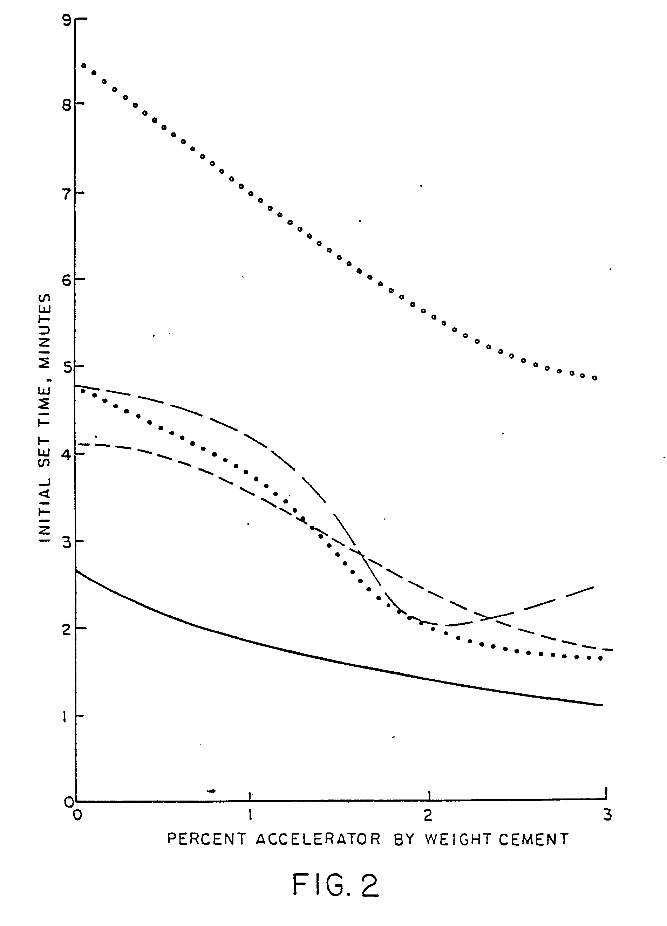

When utilized alone, neither component caused the cementitious composition to achieve an initial set within three minutes and final set within nine minutes as described in ASTM C-266-77, "Time of Setting of Hydraulic Cement by Gillmore Needles", and proposed ASTM Committee C 09.03.08.07, "Compatibility of Shotcrete Accelerators and Portland Cement by Use of Gillmore Needles". When utilized alone, the alkali metal carbonates will not obtain an initial set within three minutes and they will not obtain a final set within nine minutes. Although ferric iron salts, e.g., ferric sulfate, when utilized alone, will obtain an initial set within three minutes, the final set will be much longer than nine minutes. However, when both components are used together as an accelerator, they unexpectantly act together as demonstrated in Figures 1 and 2 to obtain initial and final settings which are not only within the prescribed times, but which are generally less than the setting times that would be expected by a simple averaging of each component's setting times.

Brief description of the Figures

Figure 1 is a semilogarithmic graphic representation of the setting times of Portland cement containing different admixtures of sodium carbonate and/or ferric sulfate.

Figure 2 is a linear graphic representation of the initial setting times of Figure 1.

Modes of the invention

The accelerators of the present invention are useful in cementitious compositions wherein rapid initial and final settings are desired. Such compositions include hydraulic cements, mortars and concretes. The cement can be either Portland cement or a high aluminous cement, for example, that used in refractory applications. Due to the rapid setting obtained by these accelerators, the cementitious composition must be utilized quickly after formation and will, therefore, be utilized generally as a hand applied mortar or as a dry process shotcrete. The greatest area of use will be found in dry process shotcrete.

The accelerator is incorporated into a cementitious composition in an amount which causes the cementitious composition to obtain an initial and a final setting desired for the particular application of the cementitious composition. Generally, the accelerator is added in an amount which is sufficient to obtain a final set of the cementitious composition within about 60 minutes and more preferably within 30 minutes and most preferably within about 10 minutes. Generally, the accelerator will be utilized in an amount of from about 0.5 weight percent to about 10 weight percent of the cementitious composition, preferably in an amount of from about 1 to about 5 percent by weight and more preferably from about 3 to about 4 percent by weight of the cementitious composition.

The preferred alkali metal carbonates are sodium and potassium carbonates. Sodium carbonate is the most preferred. Since the alkali metal carbonate is primarily responsible for the final set of the cementitious composition, it should be utilized in an amount which is sufficient, in conjunction with the ferric salt, to enable the final set to occur within about 60 minutes, more preferably within about 30 minutes and most preferably within about 10 minutes of the hydration of the cementitious composition. Generally, the alkali metal carbonate will form from about 20 to about 80 percent of the accelerator and more preferably will form less than about 50 percent of the accelerator with from about 30 to about 40 percent being the most preferred.

The preferred inorganic salts of ferric iron are ferric acid salts, excluding ferric phosphate, such as ferric sulfate, ferric chloride and ferric nitrate. Ferric sulfate and ferric chloride are more preferred. Since ferric chloride (as well as the ferric nitrate) may be corrosive to reinforcing material, ferric sulfate is most preferred. The ferric iron component is utilized in an amount which is sufficient, when used in conjunction with the alkali metal carbonate, to cause the cementitious composition to obtain an initial set within about 10 minutes and more preferably within about three minutes. Additionally, since the ferric iron component is responsible for reducing the alkalinity of the sodium carbonate and, to a much lesser extent, the alkaline reaction products formed during the hydration and hardening of the cementitious composition, it is further utilized in an amount sufficient to obtain a desired pH. The amount of the ferric iron salt utilized to achieve a particular pH will be dependent upon the particular salt and the particular cement. For example, to achieve a pH of about 7 for an accelerator used in a Type 1 Portland cement shotcrete about 60 percent of the accelerator is comprised of ferric sulfate. Generally, the ferric iron component of the accelerator comprises from about 80 to about 20 percentage of the accelerator and more preferably at least 50 percent and most preferably from about 60 to about 70 percent of the accelerator.

As is known by those in the art, many factors may affect the dosage of accelerator, e.g., temperature, source and type of cement, water content of the aggregate and end result desired. For example, to maintain a given degree of acceleration, the dosage of the accelerator generally must be increased as temperature decreases. Additionally, the induced acceleration of a cement caused by a given dosage of an accelerator may be less in a slower setting type cement as compared to a faster setting type cement. Thus, as is often done with shotcrete, it may be desirable to test the compatibility of the ratio and dosage of the accelerators of the present invention with the particular cementitious compositions being utilized. Proposed ASTM test, "Compatibility of Shotcrete Accelerators and Portland Cement by Use of Gilmore Needles" is a method for testing such compatibility.

The cementitious compositions are not critical and appropriate formulations are known by those in the

3

art. In addition to the accelerator, the cementitious composition generally will contain from about 10 to about 35 percent cement and from about 65 to about 90 percent aggregate. Sufficient water is added to obtain a cement to water ratio of from about 0.28 to about 0.60.

Examples

Example 1

Fifteen samples of Type 1 Portland cement were prepared utilizing different amounts of sodium carbonate and ferric sulfate. Each sample contained Type 1 Portland cement, as described in ASTM C-150. The amount of accelerator varied from about 1 to about 3 percent by weight of the cement mixture and the components of accelerators were as follows (given as weight percentage of total accelerator):

Sample 1:  0    $Na_2CO_3$: 100   $Fe_2(SO_4)_3$

Sample 2:  33.3 $Na_2CO_3$:  67.7 $Fe_2(SO_4)_3$

Sample 3:  40   $Na_2CO_3$:  60   $Fe_2(SO_4)_3$

Sample 4:  50   $Na_2CO_3$:  50   $Fe_2(SO_4)_3$

Sample 5: 100  $Na_2CO_3$:   0   $Fe_2(SO_4)_3$

Water was added in an amount sufficient to obtain a water to cement ratio of about 0.30.

The initial and final setting time for each sample was measured in accordance with ASTM test C-266-77, "Time of Setting of Hydraulic Cement by Gillmore Needles". The results are given in Figure 1 and Figure 2 which is a linear representation of the initial setting times given in Figure 1.

The results demonstrate that this mixture unexpectantly acts together to obtain a final setting time that is less than the time required when either component is utilized alone and to obtain both final and initial setting times, when the accelerator mixture comprises greater than about 1 percent by weight of the cement, which are less than would be expected by proportionally averaging the individual setting times of the components. Thus, the components of the accelerators of this invention act together in a synergistic manner.

Example 2

To determine the setting times and strength development, several samples of a concrete mixture utilizing the accelerators of the present invention were formulated and applied as dry process shotcrete. Additionally, comparative samples of the same concrete mixture, containing no accelerator and containing a prior art accelerator of sodium carbonate and sodium aluminate, were also applied as dry process shotcrete. The concrete mixture utilized in each sample was prepared in accordance with ACI (American Cement Institute) 506.2-77 and had the following composition:

| | |
|---|---|
| Portland Cement, ASTM C-150, Type I | 846 lbs (384 kg) |
| Sand, ASTM C-33 Concrete Aggregates | 2032 lbs (923 kg) |
| Coarse Aggregate, ASTM C-33 | 870 lbs (395 kg) |
| Accelerator | varied with each sample |

The composition and amount of the accelerator in each sample were as follows:

| Sample | Accelerator (% of components) | Amount, (wt.% of concrete) |
|---|---|---|
| 1 (Control) | None | 0 |
| 2a (Prior Art) | | 1 |
| 2b | (23) $AlNaO_2$: | 2 |
| 2c | (73) $Na_2CO_3$ | 3 |
| 3a | (50) $Na_2CO_3$: | 1 |
| 3b | (50) $Fe_2(SO_4)_3$ | 2 |
| 3c | | 3 |
| 4a | (60) $Na_2CO_3$: | 1 . |
| 4b | (40) $Fe_2(SO_4)_3$ | 2 |
| 4c | | 3 |

Each sample of dry shotcrete was mixed in a continuous volumetric batcher and mixer which had been calibrated to deliver dry concrete conforming to ASTM Specification C-685-80, "Concrete made by Volumetric Batching and Continuous Mixing". The dry shotcrete was conveyed through a hose by a continuous feed gun with water being injected into the mixture at the nozzle in accordance with standard practice. Although the cement to water ratio cannot be regulated exactly, to the extent possible, the two were added together to obtain a ratio of cement to water of about 0.3. Each sample of shotcrete was gunned into 18"×18"×6" (46×46×15 cms) vertically mounted steel molds. Immediately after the applications of the shotcretes, measurements of the setting times were initiated and taken in accordance with ASTM C-403-77, "Test for Time of Setting of Concrete Mixtures by Penetration Resistance". Additionally, the strength of the resulting concrete was measured at intervals 0.33, 1, 3, 7, 28 and 56 days. Standard cores, measuring 3" (8 cms) in diameter and 6" (15 cms) in height, were taken immediately prior to each test interval. Both the coring and testing of strength were done in accordance with ASTM C-42-77, "Obtaining and Testing Drilled Cores and Sawed Beams of Concrete".

The initial and final setting times for each sample are given in Table 1 and the strengths developed by each sample are given in Table 2.

TABLE 1

| Sample | Initial set time, minutes | Final set time, minutes |
|---|---|---|
| 1 (Control) | 40 min 15 sec | 136 min 10 sec |
| 2a (Prior Art) | 3 min 30 sec | 84 min |
| 2b | 4 min 20 sec | 9 min 15 sec |
| 2c | 4 min 0 sec | 6 min 48 sec |
| 3a | 4 min 30 sec | 63 min |
| 3b | 1 min 12 sec | 11 min 30 sec |
| 3c | 1 min 12 sec | 5 min 30 sec |
| 4a | 3 min 30 sec | 7 min 50 sec |
| 4b | 1 min 30 sec | 3 min 50 sec |
| 4c | 0 min 45 sec | 3 min 18 sec |

TABLE 2

| Sample | Compressive strength, P.S.I. (MPa) at | | | | | |
|---|---|---|---|---|---|---|
| | 0.33 | 1 | 3 | 7 | 28 | 56 days |
| 1 (Control) | 2970 (20.5) | 5440 (37.5) | 5970 (41.2) | 6590 (45.4) | 7040 (48.5) | 8070 (55.6) |
| 2a (Prior Art) | 2820 (19.4) | 4110 (28.3) | 4635 (32.0) | 4750 (32.8) | 5290 (36.5) | 4720 (32.5) |
| 2b | 2380 (16.4) | 3130 (21.6) | 3355 (23.1) | | 4440 (30.6) | 4350 (30.0) |
| 2c | 2320 (16.0) | 2430 (16.8) | 2765 (19.1) | 2830 (19.5) | 3240 (22.3) | 3830 (26.4) |
| 3a | 3490 (24.1) | 4810 (33.2) | 4810 (33.2) | 5065 (34.9) | 6020 (41.5) | 5970 (41.2) |
| 3b | 2960 (20.4) | 3430 (23.6) | 3830 (26.4) | 4005 (27.6) | 4615 (31.8) | 5780 (39.9) |
| 3c | 2300 (15.9) | 2840 (19.6) | 3165 (21.8) | 3445 (23.8) | 4010 (27.6) | 4700 (32.4) |
| 4a | 3710 (25.6) | 3990 (27.5) | 4525 (31.2) | 4680 (32.3) | 5610 (38.7) | 6130 (42.3) |
| 4b | 3070 (21.2) | 3710 (25.6) | 3960 (27.3) | 4090 (28.2) | 4805 (33.1) | 5450 (37.6) |
| 4c | 2880 (19.9) | 3420 (23.6) | 3555 (24.5) | | 4350 (30.0) | 4640 (32.0) |

## Claims

1. A dry, rapid setting, cementitious composition comprising a dry mixture containing a hydraulic cement and a setting accelerator, characterised in that the accelerator comprises an alkali metal carbonate and an inorganic salt of ferric iron other than ferric phosphate, the alkali metal carbonate and said ferric salt being present in said mixture in such amounts and proportions that upon mixing the composition with water they produce an initial set in not more than 10 minutes and a final set in not more than 60 minutes according to ASTM C-266-77.

2. A composition according to claim 1 in which the alkali metal carbonate is sodium carbonate or potassium carbonate.

3. A composition according to claim 1 or 2 in which the inorganic ferric iron salt is ferric chloride, ferric nitrate or ferric sulfate.

4. A composition according to claim 1, 2 or 3 in which the said accelerator constitutes from 0.5—10 weight percent of the dry mixture.

5. A composition according to claim 4, wherein the accelerator constitutes from 1—5% by weight of the dry mixture.

6. A composition according to any one of claims 1—5, wherein the accelerator comprises 20—80% by weight of alkali metal carbonate, based on the combined weights of the alkali metal and ferric salts.

7. A composition according to claim 6, wherein the accelerator comprises 30—40% by weight of alkali metal carbonate based on the combined weight of the alkali metal and ferric iron salts.

8. A composition according to any one of claims 1—7 which has an initial set of not more than 3 minutes and a final set of not more than 10 minutes (ASTM C-266-77).

9. A composition according to any one of claims 1—8 in which the cementitious composition is a shotcrete.

10. A composition according to any one of claims 1—8 in which the cementitious composition is a hand applied mortar.

11. A method of mixing and applying a rapid setting cementitious composition which comprises adding water to a premixed dry cementitious composition containing a hydraulic cement and an accelerator immediately prior to the application thereof, characterised in that the dry composition is a rapid setting cementitious composition as claimed in any one of claims 1—10.

6

**Patentansprüche**

1. Trockene, schnell abbindende Zementzusammensetzung aus einem Trockengemisch, das einen hydraulischen Zement und einen Abbindebeschleuniger enthält, dadurch gekennzeichnet, daß der Beschleuniger ein Alkalicarbonat und ein von Eisen-III-phosphat verschiedenes anorganisches Salz von Eisen-III-Ionen umfaßt, wobei das Alkalicarbonat und das Eisen-III-Salz in dem Gemisch in solchen Mengen und Mengenverhältnissen enthalten sind, daß beim Mischen der Zusammensetzung mit Wasser sie eine Anfangsabbindung in nicht mehr als 10 min und eine Endhärtung in nicht mehr als 60 min gemäß ASTM C-266-77 ergeben.

2. Zusammensetzung nach Anspruch 1, in welcher das Alkalicarbonat Natriumcarbonat oder Kaliumcarbonat ist.

3. Zusammensetzung nach Anspruch 1 oder 2, in welcher das anorganische Eisen-III-Salz Eisen-IIIchlorid, Eisen-III-nitrat oder Eisen-III-sulfat ist.

4. Zusammensetzung nach Anspruch 1, 2 oder 3, in welcher der Beschleuniger 0,5 bis 10 Gew.-% des Trockengemisches ausmacht.

5. Zusammensetzung nach Anspruch 4, worin der Beschleuniger 1 bis 5 Gew.-% des Trockengemisches ausmacht.

6. Zusammensetzung nach einem der Ansprüche 1 bis 5, worin der Beschleuniger 20 bis 80 Gew.-% Alkalicarbonat, bezogen auf das Gesamtgewicht der Alkali- und Eisen-III-Salze, enthält.

7. Zusammensetzung nach Anspruch 6, worin der Beschleuniger 30 bis 40 Gew.-% Alkalicarbonat, bezogen auf das Gesamtgewicht der Alkali- und Eisen-III-Salze, enthält.

8. Zusammensetzung nach einem der Ansprüche 1 bis 7, die eine Anfangsabbindung von nicht mehr als 3 min und eine Endhärtung von nicht mehr als 10 min (ASTM C-266-77) hat.

9. Zusammensetzung nach einem der Ansprüche 1 bis 8, in welcher die Zementzusammensetzung ein Spritzbeton ist.

10. Zusammensetzung nach einem der Ansprüche 1 bis 8, in welcher die Zementzusammensetzung ein von Hand aufzubringender Mörtel ist.

11. Verfahren zum Mischen und Aufbringen einer schnell abbindenden Zementzusammensetzung, bei dem man zu einer vorgemischten trockenen Zementzusammensetzung, die einen hydraulischen Zement und einen Beschleuniger enthält, unmittelbar vor dem Aufbringen derselben Wasser zusetzt, dadurch gekennzeichnet, daß die trockene Zusammensetzung eine schnell abbindende Zementzusammensetzung nach einem der Ansprüche 1 bis 10 ist.

**Revendications**

1. Une composition de ciment, sèche, à prise rapide comportant un mélange sec contenant un ciment hydraulique et un accélérateur de prise, caractérisée en ce que l'accélérateur comporte un carbonate d'un métal alcalin et un sel inorganique de fer ferrique, autre que phosphate ferrique, le carbonate de métal alcalin et ledit sel ferrique étant présents dans ledit mélange en quantités et proportions telles que, par mélange de la composition avec de l'eau, elles produisent un début de prise en pas plus de 10 minutes et une fin de prise en pas plus de 60 minutes, suivant ASTM C-266-77.

2. Une composition selon la revendication 1 où le carbonate de métal alcalin est le carbonate de sodium ou le carbonate de potassium.

3. Une composition selon la revendication 1 ou 2, où le sel de fer ferrique inorganique est le chlorure ferrique, le nitrate ferrique ou le sulfate ferrique.

4. Une composition selon la revendication 1, 2 ou 3, où ledit accélérateur constitue de 0,5 à 10% en poids du mélange sec.

5. Une composition selon la revendication 4, où ledit accélérateur constitue de 1 à 5% en poids du mélange sec.

6. Une composition selon une quelconque des revendications 1 à 5, où l'accélérateur comporte 20—80% en poids de carbonate de métal alcalin, sur la base des poids combinés des sels de métal alcalin et ferrique.

7. Une composition selon la revendication 6, où l'accélérateur comporte 30—40% en poids de carbonate de métal alcalin, sur la base des poids combinés des sels de métal alcalin et ferrique.

8. Une composition selon une quelconque des revendications 1 à 7, qui possède un début de prise de pas plus de 3 minutes et une fin de prise de pas plus 10 minutes (ASTM C-266-77).

9. Une composition selon l'une quelconque des revendications 1 à 8, où la composition de ciment est une gunite.

10. Une composition selon une quelconque des revendications 1 à 8, où la composition de ciment est un mortier appliqué à la main.

11. Un procédé de mélangeage et d'application de composition de ciment, qui comporte l'addition d'eau à une composition sèche prémélangée de ciment contenant un ciment hydraulique et un accélérateur immédiatement avant son application, caractérisé en ce que la composition sèche est une composition de ciment selon une quelconque des revendications 1 à 10.

7

FIG. 1

FIG. 2